# EUROPEAN PATENT SPECIFICATION

(11) **EP 0 456 045 B1**
(45) Date of publication and mention of the grant of the patent: **06.08.1997**
(21) Application number: 91106714.8
(22) Date of filing: 25.04.1991
(51) Int. Cl.: G06T 17/20

(54) **Polygon tiling apparatus**
Gerät zum Unterteilen in Polygone
Appareil pour diviser en polygones

(30) Priority: 26.04.1990 US 514724
(43) Date of publication of application: 13.11.1991
(73) Proprietor: HONEYWELL INC., Minneapolis Minnesota 55408 (US)
(72) Inventor: Fischer, Douglas A., Albuquerque, NM 87112 (US); Thorpe, Douglas E., Albuquerque, NM 87112 (US); Jackson, Keith L., Phoenix, Arizona 85027 (US)
(74) Representative: Herzbach, Dieter, Dipl.-Ing.

(56) References cited:
- EP-A- 0 314 335

## Description

### FIELD OF THE INVENTION

The present invention is directed to an apparatus for generating polygons according to the preamble of claim 1.

### BACKGROUND OF THE INVENTION

Images displayed by computer graphics are comprised of many small polygons of various shapes and sizes. Algorithms used to create a polygon using digital techniques are well known. However, they are generally implemented in software on a microprocessor. For real time applications, that is, situations where the display must be updated 20 times a second or more, the current state of the art is too slow. This is due to the fact that prior art devices depend primarily on software techniques and do not incorporate a viable hardware approach.

It is therefore the object of the present invention to implement a polygon tiling algorithm in electronic hardware, thereby allowing a much faster polygon tiling speed. This object is achieved by characterizing features of claim 1. Further advantageous embodiments of the inventive apparatus may be taken from the dependent claims. The invention provides a means to pipeline the polygon data so that a new polygon can be loaded into the hardware at the same time it is being tiled, and simultaneously as a tiled polygon is being provided as output information to a graphics rendering engine.

One method of generating three dimensional graphics initially generates three dimensional polygons which form the graphics. The process of generating such polygons is referred to as tiling. Tiling can occur in one of two places during the polygon rendering process in a graphic display system. In a first case, a set of points can be tiled and then transformed from world space into screen space. This approach has disadvantages in that a point may undergo transformation multiple times. Such an approach degrades the performance of the transformation unit, or may require a higher throughput from the transformation unit in order to meet system requirements. In a second approach, the points are tiled after transformation. This eliminates the disadvantage caused by the first method. When terrain is being transformed, as in the case of a digital map application, it is desirable to transform a string of data posts as one object in order to take advantage of algorithmic simplification and the transformation. In order to generate the polygons, two lines of objects of transformed points are required. It is desirable to use the polygon tiling engine in a system for more than just tiling terrain. Therefore, it must have the flexibility to handle objects of any kind, in order to keep the cost of the total system to a minimum. In a digital map system the polygon tiling engine is needed in order to generate three dimensional objects like terrain features or symbology.

### SUMMARY OF THE INVENTION

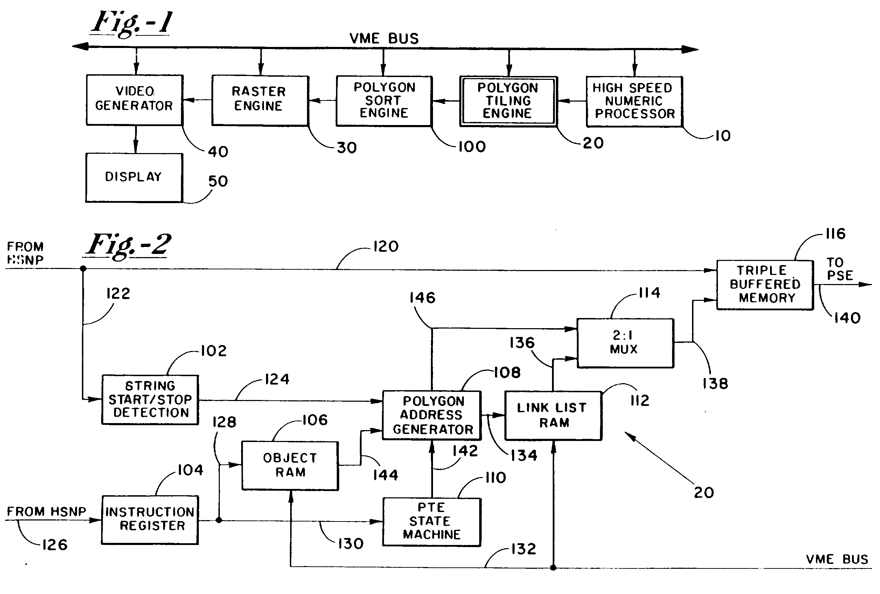

Figure 1 shows a block diagram of the major components of a high speed graphics display system. These include a means for display 50, a video generator means 40, a raster engine means 30, a polygon sort engine means 100, a tiling engine means 20 and a high speed numeric processor means (HSNP) 10. The polygon tiling engine (PTE) 20 fits architecturally between the high speed numeric processor and the polygon sort engine. The PTE as claimed generates polygons using a list of vertices and an object type code. Each vertex consists of an X, Y screen location, a Z depth, an RGB color, and a K value wherein K is the translucency factor. For each line of vertices, the polygon tiling engine receives and stores all the vertices in a line of memory, records the start and stop address of the vertices in memory and further stores the object type represented by the line of vertices. Each line is either an object or, in the case of terrain, half of a series of objects. Vertices are received from the previous stage in a graphics pipeline, namely the high speed numerical processor.

The tiling section uses object type in one of three ways. In the first case, if the object type is terrain, the tiling section uses two lines of memory to generate three vertex polygons or triangles of terrain. It uses the start and stop address of each line in forming the triangles. In the second case if the object type is one large polygon comprised of N vertices, the PTE simply passes the polygon on through to the output. In the third case, if the object type is a user defined object, the polygon tiling engine uses the object type code to obtain a start address in a logical mapping random access memory (RAM). The logical mapping RAM contains all the addresses for the line RAMs in order to generate all the polygons in the object. The polygon tiling engine moves on to the next object when all the polygons have been tiled on a given line. The polygon tiling engine transmits the polygon onto the next stage of the rendering process, namely the polygon sort engine.

The invention provides a polygon tiling engine which can accommodate any number of objects with any number of vertices.

The invention further provides a polygon tiling engine which can be implemented in a standard cell solution, thereby providing a polygon tiling engine capable of use in a graphics display pipeline with update requirements of 20 times per second or more.

One advantage of the present invention is that it provides a polygon tiling engine which is much faster than performing a similar algorithm in software on a microprocessor.

Other objects, features and advantages of the present invention will become apparent to those skilled in the art through the Description of the Preferred Embodiment, Claims, and drawings herein wherein like numerals refer to like elements.

### BRIEF DESCRIPTION OF THE DRAWINGS

Figure 1 is a block diagram of certain major components used in a high speed graphic display system including the polygon tiling engine of the invention.

Figure 2 is a block diagram of the one example embodiment of the polygon tiling engine as provided by the instant invention.

Figure 3 schematically shows a view volume area of DTED posts as scanned by a HSNP.

Figure 4 conceptually shows an illustration of X', Y' location and Z depth of DTED points.

Figure 5 shows an example of terrain tiling as provided by the present invention.

Figure 6 shows an example of an N vertice polygon as processed by the present invention.

Figure 7 shows an example of a user defined object as processed by the present invention.

Figure 8 illustrates the apparatus employed in one embodiment of the invention to tile a user defined object.

Figure 9 is a block diagram which schematically illustrates one section of the triple buffered memory employed in one embodiment of the invention.

Figure 10 is a block diagram which schematically illustrates the START/STOP address registers employed in one embodiment of the invention.

Figure 11 is a more detailed block diagram which schematically illustrates the object RAM employed in one embodiment of the invention.

Figures 12A and 12B are intended to be considered together as a single drawing to form a more detailed diagram of the START/STOP ADDRESS registers as used in one embodiment of the invention.

Figure 13 is a more detailed block diagram of the LINK LIST RAM as employed in one embodiment of the invention.

Figure 14 shows the input and output signals used in the tiler state machine as employed in one embodiment of the invention.

Figure 15 is a diagram of the interface between the Polygon Tiling Engine of the invention and a Polygon Sort Engine.

### DESCRIPTION OF THE PREFERRED EMBODIMENT

Referring now to Figure 2, a block diagram of one example embodiment of the polygon tiling engine as provided by the instant invention is shown. The polygon tiling engine comprises string START/STOP detection means 102, instruction register means 104, object storing means 106, PTE state machine means 110, polygon address generator means 108, link list memory means 112, multiplexer means 114, and triple buffered memory means 116. The string START/STOP detection means 102 is connected by means of input line 122 to a first output of the HSNP. The string START/STOP detection means 102 provides an output on output line 124 to a first input of polygon address generator means 108. Instruction memory means 104 accepts instruction inputs from a second output of the high speed numerical processor on line 126 and provides polygon tiling instruction outputs on lines 128 and 130. Object storing means 106 accepts outputs from instruction register means 104 on line 128 at a first input. Object storing means 106 may advantageously be a digital storage device such as a random access memory (RAM). A second input of object storing means 106 is tied via line 132 to the VME bus. The PTE state machine means 110 accepts outputs from the instruction register 104 on line 130. PTE state machine means 110 outputs state machine commands on line 142 to a first input of the polygon address generator 108. The second input of the polygon address generator accepts data from the string START/STOP detection means 120 on line 124, while a third input of the polygon address generator 108 receives data on line 144 from the output of the object storing means 106. The polygon address generator has a first output on line 134 and a second output on line 146. The output on line 134 is presented to a first input of link list RAM 112. The second input of link list RAM 112 is connected to the VME bus. The output of link list RAM 112 is presented on line 136 to a first input of multiplexer means 114. Multiplexer means 114 is preferably a 2-to-1 multiplexer. A second input of multiplexer means 114 is connected to line 146 for accepting data from the polygon address generator. The multiplexer means 114 has an output on line 138 to a first input of triple buffered memory 116. A second input of triple buffered memory 116 which has an output on line 140 is connected to an output 120 of the high speed numeric processor.

Those skilled in the art will recognize that the input and output lines connecting the various circuit blocks of the invention are merely representative of data flow and are shown in schematic form. Each line may typically represent a plurality of conductors, data busses or other connection means. Further, note that the various registers, RAMs and multiplexers may be individually comprised of conventional components which are commercially available. Those circuit blocks which are custom designed in accordance with the teachings of the invention are described herein in detail.

In operation, the polygon tiler engine receives transformed DTED posts from the HSNP and converts the points representative of DTED posts to polygons. The PTE receives the untransformed X, Y address and the transformed X', Y' address, the Z' depth and the R', G', B' and K' values of each point. The PTE also receives on line 122 a START and STOP bit for each line of points which it receives, and a data valid bit and four instruction bits on line 126. The instruction bits determine what type of data is being presented by the HSNP. In the illustrative embodiment of the invention described herein, the PTE can process three types of data namely, terrain data, N vertice polygons and user defined objects. Instruction 0 is representative of terrain data. Instruction 1 is representative of an N vertice polygon. Instructions 2-15 are user defined objects. In one example of the polygon tiling engine provided by the present invention, there are two restrictions imposed upon the output polygons, namely they must be externally convex and planar. The PTE processes the three types of data in the manner as described hereinbelow.

### Terrain Data

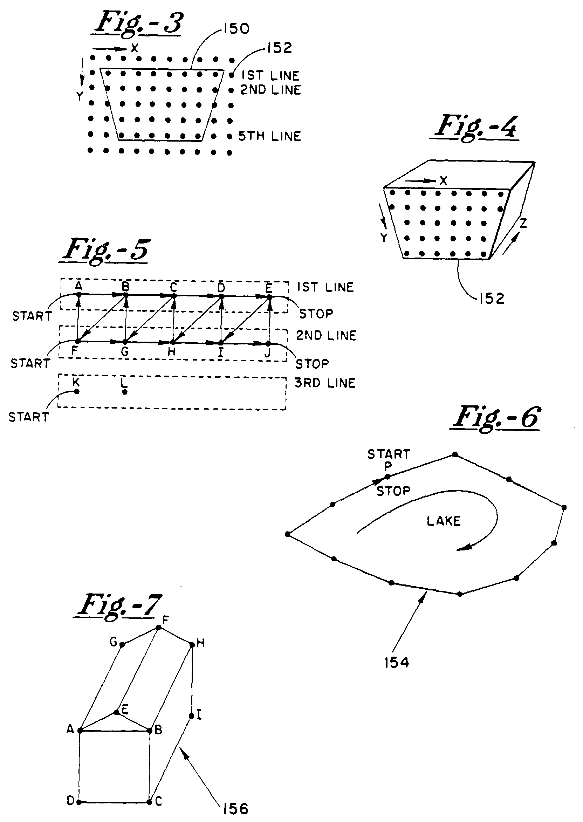

The HSNP takes the plan view DTED data and scans out a view volume area generally in the shape of a trapezoid typically covering a mapping area six miles deep by two miles wide of DTED data posts. This typically amounts to a number of triangles to be processed in the range of about 2000 to 8000. For texture map applications, the number of triangles processed may be up to about 100,000. The HSNP takes the elevation data of each post and computes an RGB value for it according to its depth and elevation from the viewer. The point is shaded for sun-angle by computing the surface normal on the fly in a well-known manner. The PTE then receives the RGB and K value of each DTED point along with its X', Y' location and Z depth. The X', Y', Z, R, G, B, K information is stored one line at a time in one of three banks of 4K by 68 RAM, for example. The lines of data posts are shown in Figure 3. The X', Y', and Z data points are shown in Figure 4. DTED posts are shown generally as dots 152.

After two lines of data, for example, the first and second lines for Figure 3, have been received, the PTE begins to transform the points into polygons while the HSNP puts the third line into memory. When the PTE finishes its transformation, it can create polygons for the next two lines while the HSNP overwrites the first line with the next line of data. There is a START and STOP control bit for each line of data. The PTE will always tile terrain in this same fashion. This prevents screen scintillation or "boiling" which may result from different tiling approaches on the same terrain data at different times. An example of the tiling method followed by the polygon tiling engine is shown in Figure 5. The tiler transforms the points A-J into polygons while the high speed numerical processor fills the third line including points K and L into the storage memory. The start point for line 1 is A, and the start point for line 2 is F. The stop points are E and J. The start point for the third line is K. As shown in Figure 5, the polygon tiling engine begins at the start point of the second line and progresses in a repeating pattern from F to A, A to B, B to F, F to G, G to B, etc. until the stop points are tiled in.

### Tiling of N Vertice Polygons

In the illustrative example of the invention described herein, instruction 1 is reserved for designating an N vertice polygon. An N vertice polygon may be a geographical feature such as a lake as exemplified in Figure 6. Such an N vertice polygon is simply passed through the PTE to the polygon sorter engine because it is assumed that each point is connected to the next point and that the first and last points are connected together (shown as START and STOP point P in Figure 6). These N vertice polygons are treated as special cases. Typical values for features such as the lake illustrated in Figure 6 are around 1,000 vertices. In one example embodiment of the invention, N can be as large as 4,000.

### User Defined Objects

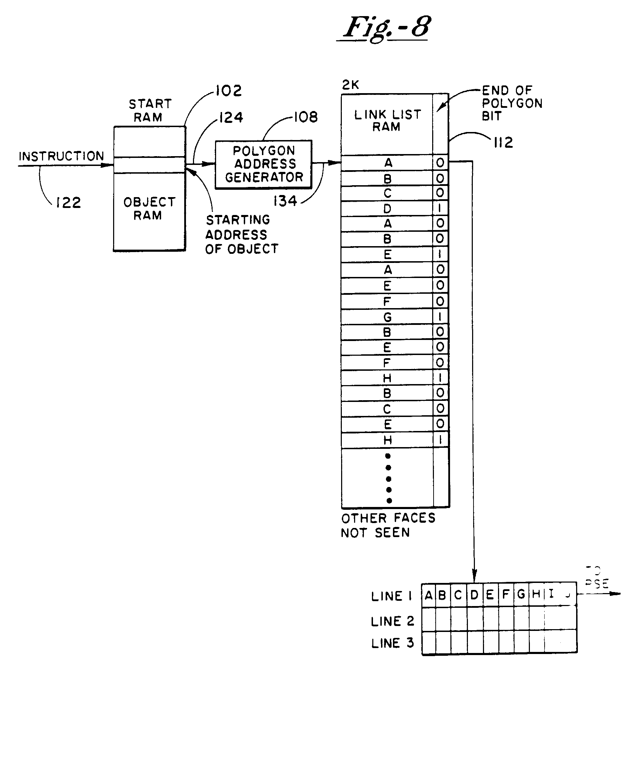

Objects such as houses, tanks, bridges and other special objects are defined by the user. The faces of the objects are already broken down into polygons and are stored in the link list RAM 112. Figure 7 shows an example of a user defined polygon as building 156 comprised of vertices A-I.

Referring now to Figure 8 with continuing reference to Figure 7, the apparatus employed in one embodiment of the invention to tile a user defined object is shown. As the instruction value comes across the instruction points from the object RAM 106 through the polygon address generator 108, to the starting address of the object in the link list RAM, the output of the RAM addressing the stored data in the line of stored points outputs the data in polygon form. The column in link list RAM 112 denoted as "End Of Polygon Bit" is set to binary 1 at the end of each polygon face. Therefore, for example, polygon ABCD ends at point D, polygon ABE ends at point E, etc. Data shown in line 1, line 2 and line 3 is sent to the PSE as 64 bit transformed data in the illustrative example described herein.

### Triple Buffered Memory

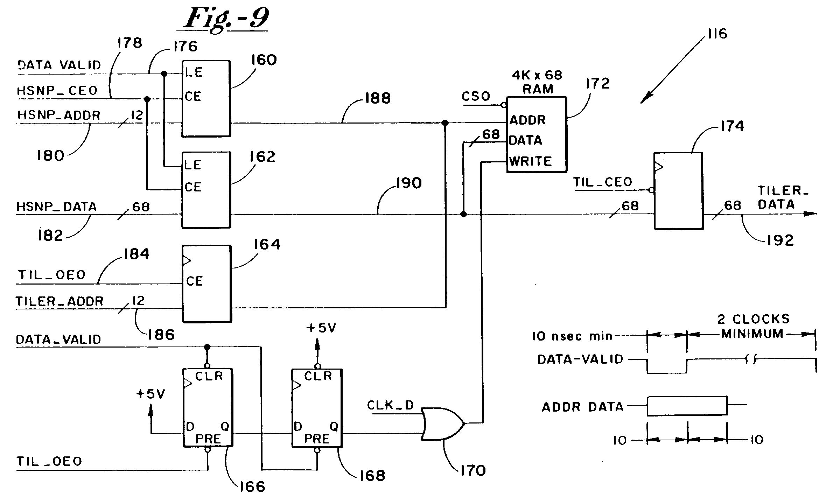

Referring now to Figure 9, a block diagram illustrating one section of the triple buffered memory 116 employed in one embodiment of the invention is shown. It is to be understood that the circuit shown in Figure 9 is replicated three times within triple buffered memory means 116. Each section of memory means 116 includes first through sixth registers 160, 162, 164, 166, 168, and 174, ORgate 170 and RAM 172. The DATA VALID signal is presented to register 160 and register 162 at their LE inputs from line 176. The CE inputs of registers 160 and 162 are tied by line 178 to the signal HSNP_CE0. A data input of register 160 accepts a HSNP_ADDR which, in this example of the invention, is a 12 bit data line 180. Register 162 has a data input on line 182 which accepts HSNP_DATA on a 68 bit input line. Register 164 has an CE input tied by line 184 to signal TIL_OE0. The register 164 further has a line 186 tied to the tiler address data, TILER_ADDR, having a 12-bit input in this example. The outputs of registers 160 and 164 merge on line 188 and are presented to RAM 172 at its ADDR input. The output of register 162 is presented from node 190 as a 68 bit data input to RAM 172 and a 68 bit data input to register 174, in this example. Registers 166 and 168 and gate 170 are configured so as to provide a write enable signal to RAM 172 on line 175. Register 174 outputs tiler data on line 192 to the polygon sort engine downstream. The small graphs beneath register 174 show the typical data valid signal timing together with the address data window. In the example shown, using a 16 MHz system clock having a 62 nsec cycle, the tiler address data is output to the RAM 172 in about 10 nsec.

### START/STOP Registers

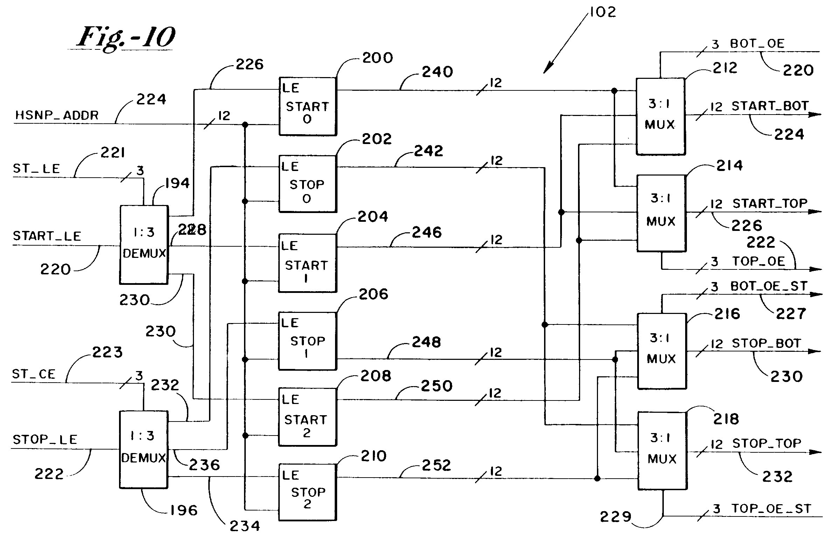

Now referring to Figure 10, a circuit diagram of the START/STOP address registers 102 of the polygon tiling engine of the invention is shown. The START/STOP address register section includes first and second demultiplexers 194 and 196, first through sixth registers 200, 202, 204, 206, 208 and 210, and first through fourth multiplexers 212, 214, 216 and 218.

First demultiplexer 194 accepts signal START_LE on line 220 as an input. Second demultiplexer 196 accepts signal STOP_LE as an input from line 222. First demultiplexer 194 also accepts an enable code ST_LE on line 221 which is typically a three bit enable code. Similarly demultiplexer 196 accepts enable signal ST_OE on line 223 which is also preferably a three bit code. Second demultiplexer 194 and 196 are preferably one to three demultiplexer devices. First demultiplexer 194 has first, second and third outputs 226, 228 and 230, which are routed to the LE inputs of registers 200, 204 and 208 wherein registers 200, 204 and 208 comprise the START registers. Demultiplexer 196 has first, second and third outputs which are similarly routed to registers 202, 206 and 210 which comprise the STOP registers.
The data inputs of each of the registers are tied to line 224 which carries the HSNP ADDR address data to their respective data inputs. In the example embodiment, this is preferably a 12 bit address data line. Each of the registers has output lines 240, 242, 246, 248, 250 and 252, respectively. Output line 240 is provided to a first input of multiplexer 212 and 214. Output line 242 is provided to first inputs of multiplexers 216 and 218. Output line 246 is provided to second inputs of multiplexers 214 and 212. Output line 248 is provided to second inputs of multiplexers 216 and 218. Output line 250 is provided to a third input of multiplexers 212 and 214 and output 252 is provided to a third input of multiplexer 216 and 218. Multiplexer 212 further accepts a BOT_OE enable signal on line 220 while multiplexer 214 accepts a TOP_OE enable signal on line 222. The first through 4th multiplexers are preferably 3-to-1 multiplexers. Multiplexer 212 and 214 provide the start signals for the top and bottom of the line on output lines 224 and 226, respectively, which carry signals START_BOT and START_BOP. Similarly, multiplexer 216 and 218 comprise the STOP multiplexers to signal the stopping points for the bottom and top lines of vertices. Multiplexer 216 accepts a 3-bit enable signal BOT_OE_ST on line 227 while multiplexer 218 accepts enable signal TOP_OE_ST on line 229. Multiplexer 216 provides output signal STOP_BOT on line 230. Multiplexer 218 provides output signal STOP_TOP on line 232. The signal STOP_BOT signals the STOP address for the bottom line of vertices. STOP_TOP is the stop signal for the top line of vertices.

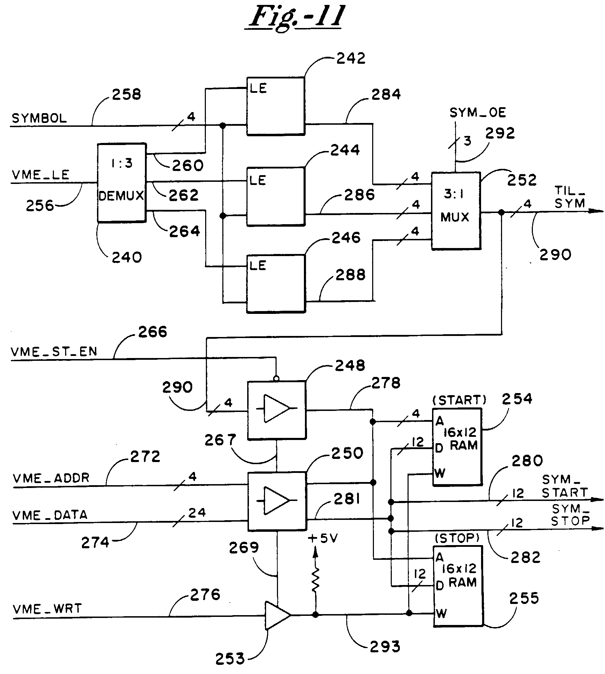

Referring now to Figure 11, a more detailed block diagram schematically illustrating the object RAM START/STOP section employed in one embodiment of the invention is shown. Included in the object START/STOP random access memory are a multiplexer 240, first, second and third registers 242, 244, and 246, multiplexer 252, first and second RAM access memory 254 and 255, and input buffers 248, 250 and 253. Demultiplexer 240 receives signal VME_LE from the VME bus on line 256. Demultiplexer 240 has a first output 260 which it presents to the LE input of register 242. Demultiplexer 240 has a second output at line 262 which is presented to the LE input of register 244 and a third output at 264 presented to the LE input of register 246. Registers 242, 244 and 246 receive a SYMBOL signal, which is, for example, a four bit signal, on their second inputs. Register 242 has an output at line 284 which is correspondingly a 4-bit output which is presented to the multiplexer 252. Note that, since three lines at a time are being processed in this example embodiment, it is preferable that the demultiplexer and multiplexer have ratios of 1:3 and 3:1, respectively. In a similar fashion, multiplexer 252 receives outputs 286 and 288 from the second and third registers 244 and 246.
Multiplexer 252 has an enable input 292 for receiving the signal SYM_OE, which is advantageously a 3-bit code. Multiplexer 252 outputs the signal TIL_SYM on line 290 to the PTE state machine 110. The START and STOP signals are controlled by the buffers 248, 250, and 253 and the first and second RAMs 254 and 255. Buffer 248 receives enable signal VME_ST_EN on line 266, which is also passed through on lines 267 and 269 to buffers 250 and 253. The TIL_SYM signal from multiplexer 252 is received by buffer 248 at a second input. Buffer 250 receives address data signal VME_ADDR on line 272 and data information on line 274 from signal VME_DATA. These are, for example, 4-bit and 24-bit signals in the illustrative embodiment. Right enable signal VME_WRT* is presented on line 276 to buffer 253 and is further connected by line 293 to the write enable inputs, W, of the first and second RAMs 254 and 255. The VME data is fed through line 281 to the RAMs. The 4-bit address data for the VME ADDR signal and the TIL_SYM signal are presented to the first and second RAMs through conductors 278. The circuit outputs symbol start signal SYM_START on line 280 and symbol stop signal SYM_STOP on line 282.

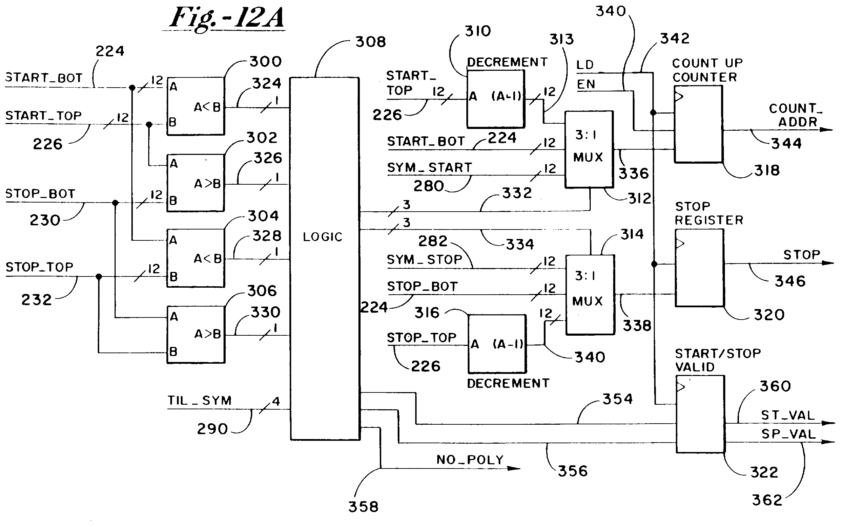

Referring now to Figures 12A and 12B which show a more detailed diagram of the START/STOP address registers included in string START/STOP detection means 102 including first through 4th comparators 300, 302, 304, and 306, logic means 308, first and second decrement counters 310 and 316, first and second multiplexers 312 and 314, up counter 318, stop register 320, validation register 322, increment counter 324, fifth comparator 328 and third multiplexer 326. Each of the comparators has a first input A and a second input B.

Comparator 300 checks whether the A input is less than the B output and outputs a corresponding signal on line 324 to logic means 308. Comparator 300 receives the signal START_BOT on the A input and the signal START_STOP on the B input. Comparator 302 determines whether its A input is greater than its B input and receives the signal START_TOP at its A input and the signal START_BOT at its B input. It outputs a corresponding signal on line 326. Comparator 304 compares the signal START_BOT on its A input to the signal STOP_TOP on its B input and verifies whether its A input is less than its B input and outputs a corresponding signal on line 328 to the logic means 308. Comparator 306 receives the signal STOP_BOT on its A input and STOP_TOP on its B input. It verifies whether its A input is less than its B input and outputs a corresponding signal to logic means 308 on line 330. Logic means 308 also receives signal TIL_SYM as, for example, a 4-bit signal on a 5th input on line 290. Logic means 308 operates in a conventional fashion to provide appropriate START and STOP signals downstream as well as a signal NO_POLY on output line 358 which informs the PSE if no polygon is to be generated. A first 3-bit output on line 332 is presented to multiplexer 312 which is preferably a 3-to-1 multiplexer, for example. Multiplexer 312 also accepts signals START_BOT and SYM_START from lines 224 and 280, respectively.

Multiplexer 312 further receives a signal on line 313 from counter 310 which decrements the START_TOP signal and outputs the decremented value on line 313 to multiplexer 312. Multiplexer 312 then outputs one of the three input signals at a time on line 336 to the counter 318. Counter 318 has a first enable input tied to line 340 which carries signal EN and a second enable input tied to enable line 342 which carries signal LO. A second three bit output from logic means 308 is supplied on line 334 as decoding logic for multiplexer 314. Multiplexer 314 outputs one of the three signals according to the decoding logic supplied on line 334 onto line 338 into STOP register 320. Inputs to multiplexer 314 include SYM_STOP, STOP_BOT and STOP_TOP as decremented by counter 316 on line 340. STOP register 320 then supplies the appropriate STOP signal on line 346. Logic means 308 also supplies validation signals on lines 354 and 356 to start and stop valid register 322 which outputs signals ST_VAL on line 360 and SP_VAL on line 362. The count address on line 334 is presented to increment means 324 on line 344, directly to multiplexer 326 and to the A input of comparator 328. Multiplexer 326 receives the incremented COUNT_ADDR value on line 346 and, in response to the code received on line 347, labeled TIL_AD_OE outputs one of the two signals on line 350 labeled TILER_ADDR1. Comparator 328 verifies whether its A input is equal to its B input STOP and outputs an appropriate signal on line 352 labeled END.

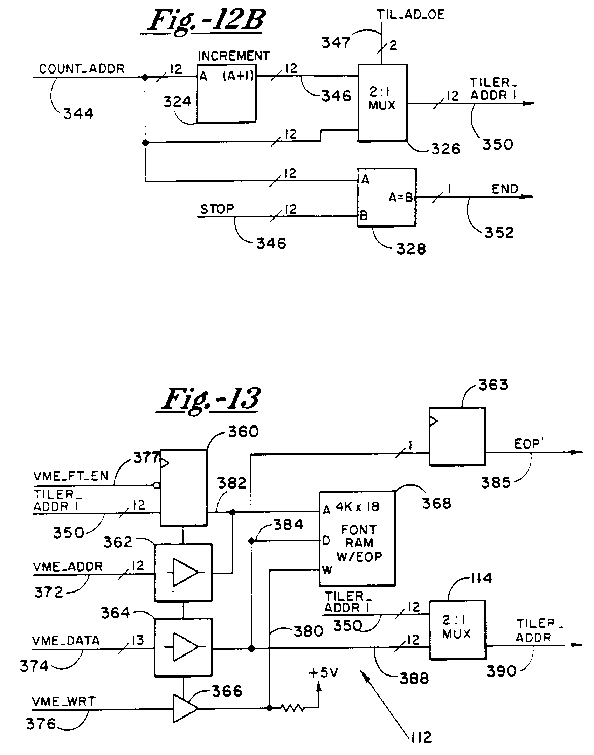

Referring now to Figure 13, a more detailed block diagram of the link list RAM 112 as employed in one embodiment of the invention is shown. Link list RAM 112 comprises a first register 360, a second register 363, first, second and third buffers 362, 364, and 366, multiplexer 114 and font RAM 368. The first register 360 receives signal VME_FT_EN on a first input line 377 and signal TILER_ADDR1 on a second input line 350. Buffer 362 receives the signal VME_ADDR on line 372. The second buffer 364 receives signal VME_DATA 374 and a third buffer 366 receives the control signal VME_WRT on line 376 which is presented on line 380 to the write enable input W of font RAM 368. The output of register 360 and buffer 362 intersect at node 382 and are presented to the address input A of font RAM 368. Font RAM 368 is advantageously a 4K by 18-bit RAM as used in one embodiment of the invention. The data input D of font RAM 368 receives the output of buffer 364 which comprises the VME_DATA signal.
At node 384 a single bit representing the EOP' signal is presented to the input of register 363 which then outputs EOP' when enabled on line 385. Multiplexer 114 is advantageously a 2:1 multiplexer which switches between the output of buffer 364 on line 388 and the TILER_ADDR1 signal on line 350 to supply the signal TILER_ADDR on line 390.

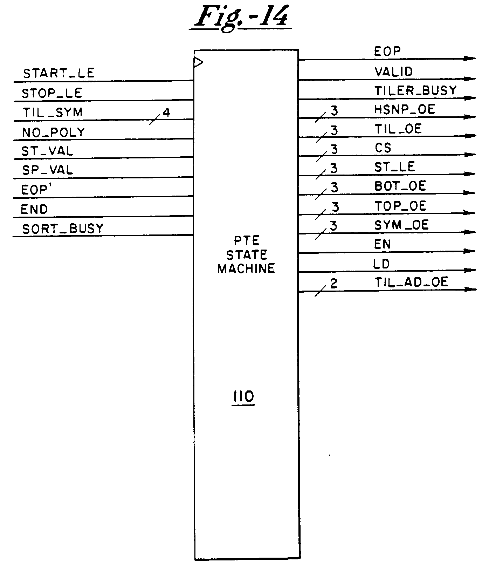

Now referring to Figure 14, a more detailed view of the PTE state machine 110 is shown including its respective inputs and outputs. Inputs for the PTE state machine include: START_LE, STOP_LE, TIL_SYM, NO_POLY, ST_VAL, SP_VAL, EOP', END and SORT_BUSY. Outputs for the PTE state machine include: EOP, VALID, TILER_BUSY, HSNP_OE, TIL_OE, CS, ST_LE, BOT_OE, TOP_OE, SYM_OE, EN, LD, and TIL_AD_OE. The following pseudocode scheme is used by one example of the invention for generating triangles for terrain.

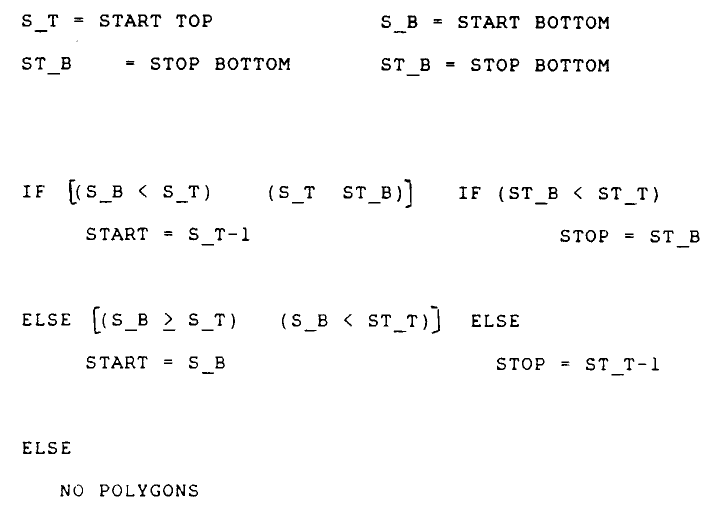

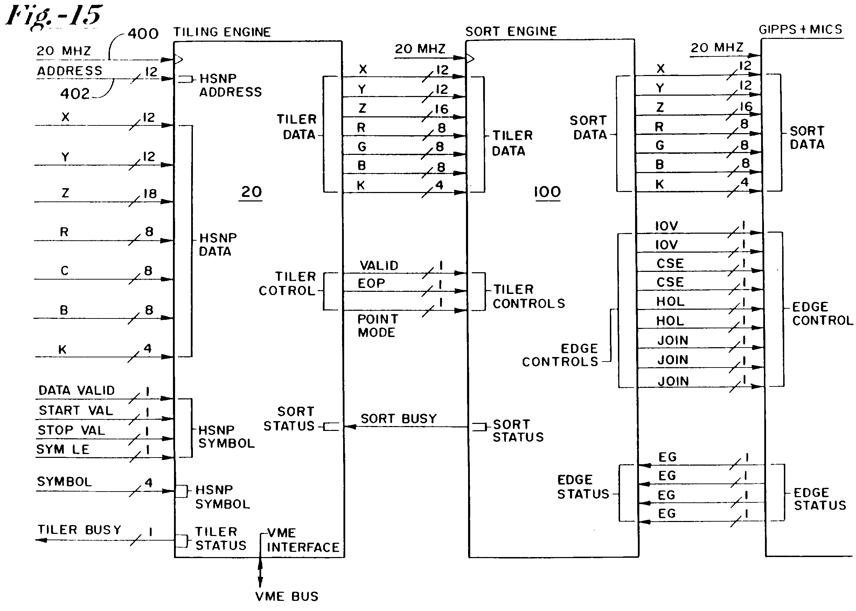

Referring now to Figure 15, a diagram of the interface between the polygon tiling engine 20 of the invention and the polygon sort engine as used in one application of a graphics pipeline is shown. Inputs to the polygon tiling engine include a clock input on line 400, address input 402, and X, Y, Z, R, G, B, and K inputs which represent data inputs to the tiler engine. Validation inputs including DATA VALID, START VAL, STOP_VAL, SYM_LE and symbol control signal SYMBOL. Outputs of tiler data include X, Y, Z, R, G, B and K. Control signals include VALID, EOP and POINT_MODE. Status input sort status which indicates whether the sort engine is busy and tiler status output TILER_BUSY. The tiling engine also includes a VME interface to the VME bus. The clock used in the illustrative example described herein is advantageously a 20 MHz clock. Addresses are advantageously 12-bits long as are the X and Y values. Z values are 16 bits, R, G, and B values are carried as 8-bit strings. The K factor is carried as a 4-bit word as is SYMBOL. Control lines are 1 bit in most cases.

## Claims

1. Apparatus for tiling polygons (20) in a computer graphics display system, wherein the system includes a high speed processor (10) which provides lines of vertices, instruction codes, object type codes, and start and stop points for the vertice lines, and the system further includes a VME bus, **characterized by:**
(a) start and stop means (102) coupled to the high speed processor (10) for receiving the start and stop points from the high speed processor and having an output (124) which provides start and stop points for the vertice lines;
(b) instruction register means (104) coupled to the high speed processor (10) for receiving instruction codes, wherein the instruction register (104) means includes an output (128) to provide tiling instructions;
(c) means for storing objects (106) coupled at a first input (128) to the instruction register output (104), and including a second input coupled to the VME bus (132), the object storing means (106) providing an object code output (144);
(d) state machine means (110) coupled to the instruction register means (104) output for controlling logic states in the polygon tiling (20) apparatus;
(e) means for generating polygon addresses (108) wherein the polygon address generating means (108) includes a first input (144) coupled to receive the object code output (144), a second input (124) coupled to receive the start and stop points from the start and stop means (102), and a third input (142) coupled to receive logic states from the state machine means (110), the polygon address generating means further including a first address output and a second address output (146, 134);
(f) means for storing (112) user defined objects coupled at a first input (134) to a first output of the polygon address generating means (108) and coupled at a second input to the VME bus (132), and further having a user defined object output (136);
(g) multiplexing means (114) coupled at a first input to the second output (146) of the polygon address generating means (108), and at a second input to the user defined object storing means (112); and
(h) buffered memory means (116) having a first input coupled to receive vertice lines (120) from the high speed processor (10) and at a second input to the multiplexer means (114) and having an output which provides tiled polygon data (140) consistent with the received inputs.

2. Apparatus according to Claim 1 **characterized in that** the instruction register means (104) provides a first instruction code to designate terrain tiling to the state machine means (110).

3. Apparatus according to Claim 2 **characterized in that** the instruction register (104) means provides a second instruction code to designate a multi-vertice polygon to the state machine means (110).

4. Apparatus according to Claim 3 **characterized in that** the instruction register means (104) provides an object type code to designate a user defined object to the state machine means (110).

5. Apparatus according to Claim 1 **characterized in that** the buffered memory means (116) is comprised of at least three identical random access memory channels.

6. Apparatus according to Claim 1 **characterized in that** the user defined object storing means (112) comprises a link list random access memory.

7. Apparatus according to Claim 1 **characterized in that** the start and stop means (102) includes:
(a) a first demultiplexer means (194) for receiving start points having at least three outputs (226, 228, 230);
(b) a second demultiplexer means (196) for receiving stop points having at least three outputs (232, 236, 234);
(c) a first plurality (200, 204, 208) of register means coupled to receive the first demultiplexer outputs (226, 228, 230) for providing start output data;
(d) a second plurality of register means (202, 206, 210) coupled to receive the second demultiplexer outputs (232, 236, 234) for providing stop output data;
(e) first multiplexer means (212, 214) coupled to the start output data (240, 246, 250); and
(f) second multiplexer means (216, 218) coupled to receive the stop output data (242, 248, 252).

8. Apparatus according to Claim 2 **characterized in that** wherein the terrain tiling for the same terrain is always processed identically so as to prevent a boiling appearance on the display system.

9. Apparatus according to Claim 6 **characterized in that** the link list random access memory (112) includes an end of polygon bit (Figure 8) storage location for each polygon.

## Patentansprüche

1. Vorrichtung zur Unterteilung von Polygonen (20) in einem graphischen Computer-Darstellungssystem, wobei das System einen Hochgeschwindigkeitsprozessor (10) umfaßt, der Linien von Scheitelpunkten, Befehlscodes, Objekttypcodes und Start- und Stoppunkte für die Scheitelpunktlinien vorgibt, und wobei das System ferner einen VME-Bus umfaßt, **gekennzeichnet durch** :
a) eine Start- und Stopeinrichtung (102), die an den Hochgeschwindigkeitsprozessor (10) angeschlossen ist, um Start- und Stoppunkte von dem Hochgeschwindigkeitsprozessor aufzunehmen und die einen Ausgang (124) besitzt, der Start- und Stoppunkte für die Scheitelpunktlinien vorgibt;
b) eine Befehlsregistereinrichtung (104), die an den Hochgeschwindigkeitsprozessor (10) für Aufnahme von Befehlscodes angeschlossen ist, wobei die Befehlsregistereinrichtung (104) einen Ausgang (128) umfaßt, um Unterteilungsbefehle vorzugeben;
c) eine Einrichtung (106) für Speicherung von Objekten, die mit einem ersten Eingang (128) an den Befehlsregisterausgang (104) angeschlossen ist und die einen zweiten Eingang umfaßt, der an den VME-Bus (132) angeschlossen ist, wobei die Objektspeichereinrichtung (106) einen Objektcode-Ausgang (144) vorgibt;
d) eine Zustandsmaschineneinrichtung (110), die an den Ausgang der Befehlsregistereinrichtung (104) angeschlossen ist, um Logikzustände in der Polygon-Unterteilungsvorrichtung (20) zu steuern;
e) eine Einrichtung (108) zur Erzeugung von Polygonadressen, wobei die Polygonadreß-Erzeugungseinrichtung (108) umfaßt: einen ersten Eingang (144), der angeschlossen ist, um den Objektcode-Ausgang (144) aufzunehmen, einen zweiten Eingang (124), der angeschlossen ist, um die Start- und Stoppunkte von der Start- und Stopeinrichtung (102) aufzunehmen, und einen dritten Eingang (142), der angeschlossen ist, um Logikzustände von der Zustandsmaschineneinrichtung (110) aufzunehmen, wobei die Polygonadreß-Erzeugungseinrichtung ferner einen ersten Adreßausgang und einen zweiten Adreßausgang (146, 134) umfaßt;
f) eine Einrichtung (112) zum Speichern von durch den Benutzer definierten Objekten, die mit einem ersten Eingang (134) mit einem ersten Ausgang der Polygonadreß-Erzeugungseinrichtung (108) verbunden ist und die mit einem zweiten Eingang mit dem VME-Bus (132) verbunden ist und ferner einen durch den Benutzer definierten Objektausgang (136) aufweist;
g) eine Multiplexereinrichtung (114), die mit einem ersten Eingang an den zweiten Ausgang (146) der Polygonadreß-Erzeugungseinrichtung (108) angeschlossen ist und mit einem zweiten Eingang an die durch den Benutzer definierte Objekt-Speichereinrichtung (112) angeschlossen ist; und
h) eine gepufferte Speichereinrichtung (116), die einen ersten Eingang besitzt, der angeschlossen ist, um Scheitelpunktlinien (120) von dem Hochgeschwindigkeitsprozessor (10) zu empfangen und die mit einem zweiten Eingang an die Multiplexereinrichtung (114) angeschlossen ist und einen Ausgang besitzt, welcher unterteilte Polygondaten (140) in Übereinstimmung mit den empfangenen Eingängen vorgibt.

2. Vorrichtung nach Anspruch 1, **dadurch gekennzeichnet**, daß die Befehlsregistereinrichtung (104) einen ersten Befehlscode vorgibt, um eine Terrainunterteilung an die Zustandsmaschineneinrichtung (110) vorzugeben.

3. Vorrichtung nach Anspruch 2, **dadurch gekennzeichnet**, daß die Befehlsregistereinrichtung (104) einen zweiten Befehlscode vorgibt, um ein Mehrfach-Scheitelpunktpolygon der Zustandsmaschineneinrichtung (110) vorzugeben.

4. Vorrichtung nach Anspruch 3, **dadurch gekennzeichnet**, daß die Befehlsregistereinrichtung (104) einen Objekttypcode vorgibt, um der Zustandsmaschineneinrichtung (110) ein durch den Benutzer definiertes Objekt vorzugeben.

5. Vorrichtung nach Anspruch 1, **dadurch gekennzeichnet**, daß die gepufferte Speichereinrichtung (116) wenigstens drei identische Speicherkanäle mit wahlfreiem Zugriff umfaßt.

6. Vorrichtung nach Anspruch 1, **dadurch gekennzeichnet**, daß die durch den Benutzer definierte Objektespeichereinrichtung (112) einen Verbindungslistenspeicher mit wahlfreiem Zugriff umfaßt.

7. Vorrichtung nach Anspruch 1, **dadurch gekennzeichnet**, daß die Start- und Stopeinrichtung (102) umfaßt:
a) eine erste Demultiplexereinrichtung (194) für den Empfang von Startpunkten und mit wenigstens drei Ausgängen (226, 228, 230);
b) eine zweite Demultiplexereinrichtung (196) für den Empfang von Stoppunkten mit wenigstens drei Ausgängen (232, 236, 234);
c) eine erste Vielzahl von Registereinrichtungen (200, 204, 208), die angeschlossen sind, um die ersten Demultiplexerausgänge (226, 228, 230) aufzunehmen und Start-Ausgangsdaten vorzugeben;
d) eine zweite Vielzahl von Registereinrichtungen (202, 206, 210), die angeschlossen sind, um die zweiten Demultiplexerausgänge (232, 236, 234) aufzunehmen und Stop-Ausgangsdaten vorzugeben;
e) eine erste Multiplexereinrichtung (212, 214), die an die Start-Ausgangdaten (240, 246, 250) angeschlossen ist; und
f) eine zweite Multiplexereinrichtung (216, 218), die angeschlossen ist, um die Stop-Ausgangsdaten (242, 248, 252) aufzunehmen.

8. Vorrichtung nach Anspruch 2, **dadurch gekennzeichnet**, daß die Terrainunterteilung für das gleiche Terrain immer identisch verarbeitet wird, um das Erscheinen einer Kristallisation auf dem Displaysystem zu verhindern.

9. Vorrichtung nach Anspruch 6, **dadurch gekennzeichnet**, daß der Verbindungslistenspeicher (112) mit wahlfreiem Zugriff einen Speicherplatz für ein Polygonende-Bit (Figur 8) für jedes Polygon umfaßt.

## Revendications

1. Appareil destiné à diviser des polygones (20) dans un système d'affichage graphique d'ordinateur, le système comprenant un processeur à grande vitesse (10) qui fournit des lignes de sommets, des codes d'instruction, des codes du type objet et des points de début et de fin pour les lignes de sommets, le système comprenant en outre un bus VME, caractérisé par :
(a) des moyens de début et de fin (102) reliés au processeur à grande vitesse (10) afin de recevoir les points de début et de fin provenant du processeur à grande vitesse et ayant une sortie (124) qui délivre des points de début et de fin pour les lignes de sommets;
(b) des moyens de registre d'instruction (104) reliés au processeur à grande vitesse (10) afin de recevoir des codes d'instruction, les moyens de registre d'instruction (104) comprenant une sortie (128) afin de fournir des instructions de division;
(c) des moyens de stockage d'objets (106) reliés à une première entrée (128) à la sortie de registre d'instruction (104), et comprenant une deuxième entrée reliée au bus VME (132), les moyens de stockage d'objets (106) délivrant une sortie de code objet (144);
(d) des moyens de machine d'état (110) reliés à la sortie des moyens de registre d'instruction (104) afin de commander des états logiques dans l'appareil de division de polygones (20);
(e) des moyens destinés à générer des adresses de polygone (108), les moyens de génération d'adresse de polygone (108) comprenant une première entrée (144) reliée de façon à recevoir la sortie de code objet (144), une deuxième entrée (124) reliée de façon à recevoir les points de début et de fin provenant des moyens de début et de fin (102), et une troisième entrée (142) reliée de façon à recevoir des états logiques provenant des moyens de machine d'état (110), les moyens de génération d'adresse de polygone comprenant, en outre, une première sortie d'adresse et une deuxième sortie d'adresse (146, 134);
(f) des moyens de stockage (112) d'objets définis par l'utilisateur reliés à une première entrée (134) à une première sortie des moyens de génération d'adresse de polygone (108) et reliés à une deuxième entrée au bus VME (132), et ayant en outre une sortie d'objet défini par l'utilisateur (136);
(g) des moyens de multiplexage (114) reliés à une première entrée à la deuxième sortie (146) des moyens de génération d'adresse de polygone (108) et à une deuxième entrée aux moyens de stockage d'objet défini par l'utilisateur (112); et
(h) des moyens de mémoire à tampon (116) ayant une première entrée reliée de façon à recevoir des lignes de sommets (120) provenant du processeur à grande vitesse (10) et à une deuxième entrée aux moyens de multiplexage (114) et ayant une sortie qui fournit des données de polygone divisé (140) en rapport avec les entrées reçues.

2. Appareil selon la revendication 1, caractérisé en ce que les moyens de registre d'instruction (104) délivrent un premier code d'instruction afin de désigner une division de terrain aux moyens de machine d'état (110).

3. Appareil selon la revendication 2, caractérisé en ce que les moyens de registre d'instruction (104) délivrent un deuxième code d'instruction afin de désigner un polygone à plusieurs sommets aux moyens de machine d'état (110).

4. Appareil selon la revendication 3, caractérisé en ce que les moyens de registre d'instruction (104) délivrent un code du type objet afin de désigner un objet défini par l'utilisateur aux moyens de machine d'état (110).

5. Appareil selon la revendication 1, caractérisé en ce que les moyens de mémoire à tampon (116) se composent d'au moins trois canaux de mémoire vive identiques.

6. Appareil selon la revendication 1, caractérisé en ce que les moyens de stockage d'objet défini par l'utilisateur (112) comportent une mémoire vive de liste de lien.

7. Appareil selon la revendication 1, caractérisé en ce que les moyens de début et de fin (102) comprennent :
(a) des premiers moyens démultiplexeurs (194) destinés à recevoir des points de début ayant au moins trois sorties (226, 228, 230);
(b) des seconds moyens démultiplexeurs (196) destinés à recevoir des points de fin ayant au moins trois sorties (232, 236, 234);
(c) une première pluralité (200, 204, 208) de moyens de registre reliés de façon à recevoir les premières sorties de démultiplexeur (226, 228, 230) afin de délivrer des données de sortie de début;
(d) une deuxième pluralité de moyens de registre (202, 206, 210) reliés de façon à recevoir les deuxièmes sorties de démultiplexeur (232, 236, 234) afin de délivrer des données de sortie de fin;
(e) des premiers moyens multiplexeurs (212, 214) reliés aux données de sortie de début (240, 246, 250); et
(f) des seconds moyens démultiplexeurs (216, 218) reliés de façon à recevoir les données de sortie de fin (242, 248, 252).

8. Appareil selon la revendication 2, caractérisé en ce que la division de terrain pour le même terrain est toujours traitée de manière identique de façon à empêcher l'aspect bouillonnant sur le système d'affichage.

9. Appareil selon la revendication 6, caractérisé en ce que la mémoire vive de liste de lien (112) comprend un emplacement de stockage de bit de fin de polygone (figure 8) pour chaque polygone.
